# EUROPEAN PATENT APPLICATION

(11) **EP 3 623 244 A1**
(43) Date of publication of application: **18.03.2020**
(21) Application number: 19195796.8
(22) Date of filing: 06.09.2019
(51) Int. Cl.: B61D 3/18, B61D 45/00, B60P 3/077, B61D 47/00

(54) **A METHOD OF LOADING AN AUTOMOBILE SEMI-TRAILER ON A FLATCAR**

(30) Priority: 11.09.2018 RU 2018132416
(71) Applicant: Ivanov, Vladimir Vladimirovich, 123056 Moscow (RU)
(72) Inventor: VDOVIN, Roman Borisovich, 141014 Mytishchi,Moskovskaya obl. (RU)
(74) Representative: Vitina, Maruta

(57) **Abstract**

The invention relates to the field of piggyback transportation, in particular, to methods for loading an automobile semi-trailer onto a flatcar. A basket for the semi-trailer is placed on the ground. The semi-trailer by means of a tractor unit is placed in the removable basket and mounted on supporting legs. The wheels of the semi-trailer are located between the transverse beams of the basket, the legs of the semi-trailer are supported by an additional beam. By using a lifting means the basket with the semi-trailer is placed on the flatcar. The interaction of the flatcar and the basket occurs through energy-absorbing buffers. An increase in the loading capacity of the semi-trailers on the flatcar is achieved.

## Description

The invention relates to the field of railway transport, in particular to a method of loading an automobile semi-trailer on a flatcar thereon said semi-trailer is transported.

It is known that the railway flatcars with a reduced level in the inter-bogie space (the so-called "pocket") are used to transport the semi-trailers under combined transport conditions.

In one known design of a flatcar (flatcar model Sdggmrss manufactured by Tatravagonka, see link: http://tatravagonka.sk/wagons/sdggmrss-2/?lang=ru, [1]) "the pocket" is fixed part of the flatcar, so for placing the semi-trailers in the pocket, said semi-trailer must be lifted and then installed in the pocket. However, most semi-trailers cannot be lifted using a crane, since the body structure of such semi-trailers does not provide such an option and said body structure is not capable of supporting the weight of a loaded semi-trailer. Thus, it is possible to load on the flatcar of this design only a special semi-trailer of reinforced construction, in the body frame whereof there are special grooves for lifting by means of load-lifting devices. However, the semi-trailers of this type are more expensive and, accordingly, less common.

There is known in the prior art a method of loading the semi-trailer on the flatcar wherein the semi-trailer is placed in a special frame located on a stationary or mobile loading ramp, parallel to a railroad car, and using hydraulic cylinders, as well as a system of rollers and guides for lateral movement installed on the railroad car, WO 2018/101883 A1, B61D 47/00, B65G 63/00, publ. 07.06.2018, [2].

The disadvantages of this method of loading are insufficient loading productivity of the whole train consisting of railroad cars of this type, since for simultaneous loading of each semi-trailer on the railroad car requires several ramps, which are technically complex and expensive objects, and the need for accurate positioning of the railroad car relative to the ramp.

There is known also a method of loading the semi-trailer onto the railroad car, wherein the semi-trailer is placed in a special loading platform (basket) located on a ramp being fixed to the ground surface and mounted on supporting legs, wherein the semi-trailer wheels are positioned between the transverse beams of the loading platform, then using load-lifting means, loading platform with semi-trailer rises above the ground and is installed on the railroad car, patent EP 2902299 A1, B61D 3/18, B61D 47/00, B61J 1/10, B65G 63/00, B66C 1/28, B66F 7/24, publ. 08/05/2015, [3] (closest prior art).

The disadvantages of this method of loading is the insufficient productivity of loading railroad cars and the need to equip the loading terminals with the ramps, which leads to an increase in financial investments in the infrastructure of the loading terminals.

The technical result of the present invention is to increase the loading productivity of the automobile semi-trailers on the flatcar, due to non-usage of the loading ramp and, accordingly, minimization of financial investments in the infrastructure of the loading terminals.

The above-mentioned technical result is achieved in that, in the method of loading the automobile semi-trailer onto the flatcar, the semi-trailer is placed in a removable basket by means of a tractor unit, is mounted on supporting legs, said supporting legs are supported on an additional transverse beams of the basket, wherein wheels of the semi-trailer are positioned between the transverse beams of the basket. Thereafter, using a lifting means the basket with the semi-trailer is lifted above the ground and placed on the flatcar. Wherein, the basket is placed on the surface of the earth before placing the semi-trailer therein. The interaction of the flatcar and the basket occurs by means of bearing surfaces and energy-absorbing buffers placed on said basket. Wherein, during the loading and installation of the basket with the semi-trailer on the flatcar, the wheels of the semi-trailer are arranged and securely fixed against displacement in pockets formed by the transverse beams of the basket.

The present invention is shown in the accompanying drawings, wherein Fig. 1 shows the removable basket of the flatcar; Fig. 2 - driving in forward direction the semi-trailer to the basket by means of the tractor unit; Fig. 3 - driving in backward direction (reversing) the semi-trailer to the basket by means of the tractor unit; Fig. 4 - installation of the semi-trailer in the basket; Fig. 5 - lifting the basket with the semi-trailer thereon, using lifting devices; Fig. 6 - installation of the semi-trailer in the basket on the flatcar (lowering the basket); Fig. 7 - the basket is installed on the flatcar.

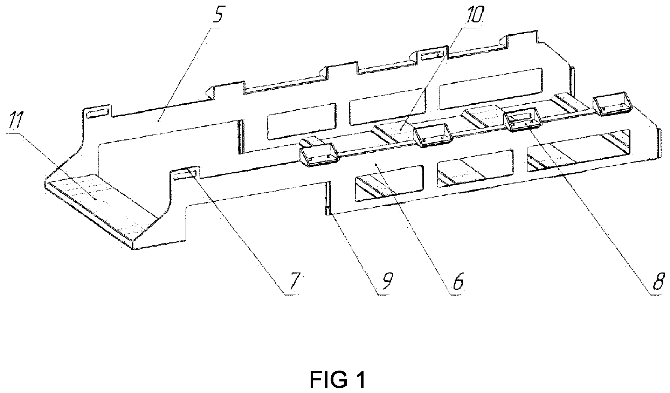

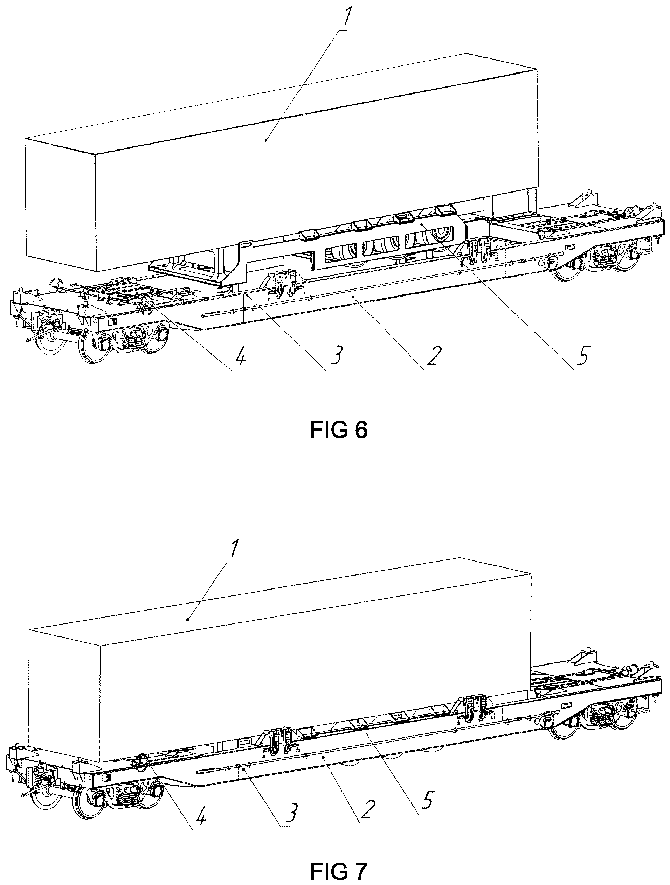

The method of loading the semi-trailer 1 (Fig. 6) relates to the flatcar 2, which contains the frame 3 with a free inter-bogie space, a device for fixing 4 pins (not shown) of the semi-trailer 1, a removable basket 5 (Fig. 1), comprising in its composition side beams 6 with brackets 7 welded at the top thereon for lifting with lifting equipment, bearing surfaces 8, energy-absorbing buffers 9, transverse beams 10, wherein the side planes of said beams are inclined, and the space between these beams is a "pocket" ", and an additional transverse beam 11.

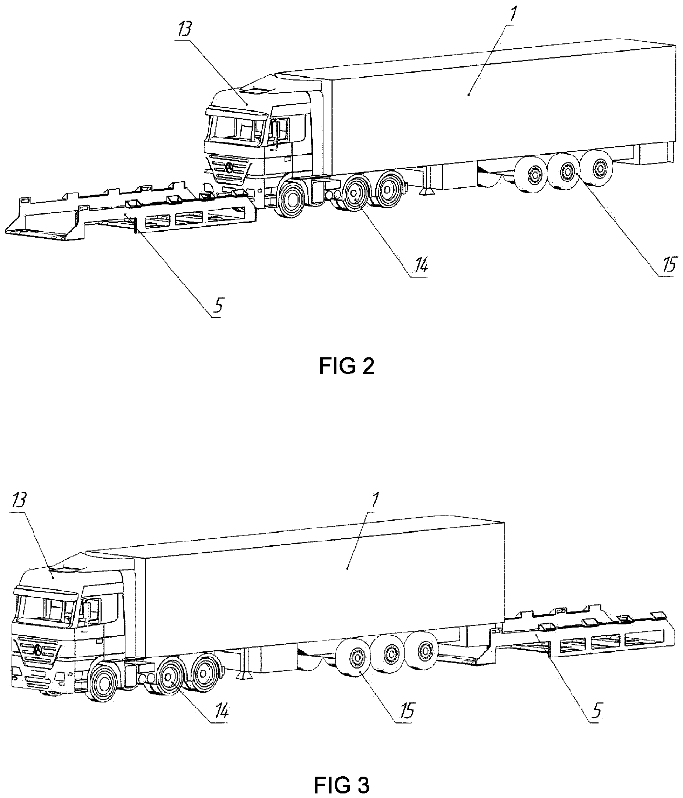

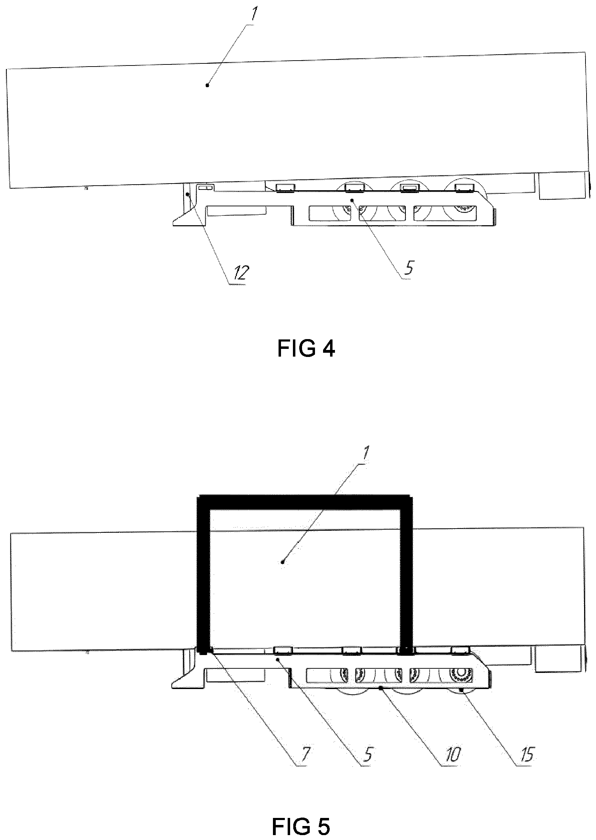

The method of loading the automobile semi-trailer on the flatcar is carried out in the following sequence:
1. Using the lifting means, the basket 5 is removed from the flatcar by the brackets 7 located on the side beams 6, and installed on the ground surface;
2. Thereafter, the tractor unit 13 (Fig. 2, 3) ensures the entry of the semi-trailer 1 into the basket 5, and this operation can be performed depending on the constraint of the surrounding space as the forward direction movement of the tractor unit 13 (Fig. 2) with the passage through the basket 5, as well as when reversing (backward direction) (Fig. 3), wherein moving forward direction (Fig. 2) the wheels 14 of the tractor unit 13 will need to move through the transverse beams 10 (Fig.1) of the basket 5 for installation of the semi-trailer 1, and when reversing (Fig. 3) the wheels 15 of the semi-trailer 1 will need to move through the transverse beams 10 of the basket 5. Thereafter, the wheels 15 of the semi-trailer 1 are placed in the space between the transverse beams 10 (Fig.1) of the basket 5;
3. By rotating the knob of the adjustment mechanism (not shown) of the support legs 12 (Fig. 4) of the semi-trailer 1, said support legs 12 are pushed down until the bearing on an additional transverse beam 11 (Fig.1) of the basket 5, thereby removing the load from the saddle of the tractor unit 13 (Fig. 2, 3);
4. Tractor unit 13 (Fig.2, 3) disengages and leaves the place of loading;
5. The air suspension (not shown) of the semi-trailer 1 is brought to the maximum raised position;
6. By rotating the knob of the adjustment mechanism (not shown) of the support legs 12 (Fig. 4) of the semi-trailer 1, said support legs 12 are moved (shortened) and the semi-trailer 1 leans forward at a certain angle;
7. The basket 5 (Fig. 5) by the brackets 7 located on the side beams 6 (Fig.1) is lifted by the lifting means from the surface of the earth, wherein the wheels 15 (Fig. 5) of the semi-trailer 1 is lowered into "pockets" formed by the transverse beams 10 (Fig.1) of the basket 5 (Fig. 5) and the semi-trailer 1 takes almost horizontal position, while maintaining a slight tilt forward;
8. The basket 5 (Fig. 6) with the semi-trailer 1 is lowered into the inter-bogie space of the flatcar 2, wherein the kingpin (not shown) of the semi-trailer 1 is located above the device for fixing 4 of the kingpin of the semi-trailer;
9. Depending on the base of the semi-trailer 1, by rotating the handwheel of the device for fixing 4 of the kingpin of the semi-trailer, is installed under the kingpin of the semi-trailer 1;
10. Thereafter, the basket 5 (Fig. 7) with the semi-trailer 1 is lowered onto the flatcar 2, wherein, due to the small angle of inclination of the semi-trailer 1, the kingpin of the semi-trailer first engages with the device for fixing 4 of the kingpin of the semi-trailer, and further lowering leads to the contact and support of the bearing surfaces 8 (Fig.1) of the basket 5 (Fig. 7) on the top sheet of the side beam of the frame 3 of the flatcar 2;
11. After carrying out the above operations, the air suspension of the semi-trailer can be lowered to the starting position;
12. Thus, the wheels 15 of the semi-trailer 1 are located in the pockets formed by transverse beams 10 (Fig.1) of the basket 5 (Fig. 7), the kingpin of the semi-trailer (not shown) is fixed in the device for fixing 4 of the kingpin of the semi-trailer, the bearing surfaces 8 (Fig.1) of the basket 5 are located on the side beams of the frame 3 (Fig. 7) of the flatcar 2;
13. The unloading process is performed in reverse sequence.

Implementation of the present method for loading the automobile semi-trailer onto the flatcar is not limited to the above example.

The present invention is implemented by using industrially manufactured devices and materials and can be applied at any railway enterprise.

## Claims

1. method of loading an automobile semi-trailer (1) onto a flatcar (2), wherein the semi-trailer (1) is placed in a removable basket (5) by means of a tractor unit (13), is mounted on supporting legs (12), said supporting legs (12) are supported on additional transverse beams (11) of the basket (5), wherein wheels (15) of the semi-trailer (1) are positioned between transverse beams (10) of the basket (5), then using a lifting means the basket (5) with the semi-trailer (1) is lifted above the ground and placed on the flatcar (2), **characterized in that** the basket (5) is placed on the surface of the earth before placing the semi-trailer (1) on said basket (5), wherein the interaction of the flatcar (2) and the basket (5) occurs by means of bearing surfaces (8) and energy-absorbing buffers (9) placed on said basket (5), wherein during the loading and installation of the basket (5) with the semi-trailer (1) on the flatcar (2), the wheels (15) of the semi-trailer (1) are arranged and securely fixed against displacement in pockets formed by the transverse beams (10) of the basket (5).
